# EUROPÄISCHE PATENTSCHRIFT

(11) **EP 2 855 947 B1**
(45) Veröffentlichungstag und Bekanntmachung des Hinweises auf die Patenterteilung: **13.12.2017**
(21) Anmeldenummer: 13734153.3
(22) Anmeldetag: 29.05.2013
(51) Int. Cl.: F16B 5/02, F16B 43/00

(54) **ZENTRIEREINRICHTUNG**
CENTRING DEVICE
DISPOSITIF DE CENTRAGE

(30) Priorität: 01.06.2012 DE 102012010804
(43) Veröffentlichungstag der Anmeldung: 08.04.2015
(73) Patentinhaber: Hahner, Bernhard, 36100 Petersberg-Bockels (DE)
(72) Erfinder: Hahner, Bernhard, 36100 Petersberg-Bockels (DE)
(74) Vertreter: Hoppe, Lars
(86) Internationale Anmeldenummer: PCT/IB2013/001076
(87) Internationale Veröffentlichungsnummer: WO 2013/179119

(56) Entgegenhaltungen:
- WO-A1-2010/006363
- FR-A1- 2 744 501

## Beschreibung

Die Erfindung betrifft eine Zentriereinrichtung zur Montage eines mit einer Öffnung versehenen Flansches mit einem Bolzen, der die Öffnung im Montagezustand durchsetzt gemäß dem Oberbegriff des Anspruchs 1.

Im Stahlbau werden Hallen üblicherweise mit Stahlstützen aufgebaut, die im Bodenbereich mit Flanschen (Fußplatten) an im Boden verankerten Stahlbolzen befestigt sind. Um eine exakte Bauweise zu garantieren, müssen die Bolzen sowohl hinsichtlich des Flansches selbst als auch in der Flucht von Stütze zu Stütze exakt ausgerichtet sein. Erforderlich ist daher eine maßgenaue Verankerung der Bolzen, üblicherweise Gewindebolzen mit Schwerlastdübeln im Fundament der Halle, was teilweise zu Zentrierproblemen bei einer Fehlausrichtung der Bolzen im gegossenen Beton führen kann. Es müssen dann aufwendige Zentrierarbeiten ausgeführt werden, beispielsweise durch eine Neuverankerung und Ausrichtung der Bolzen im bereits ausgehärteten Betonboden, was ein Aufstemmen des Bodens und damit erhebliche Kosten bei der Neujustierung verursacht.

Das Gleiche gilt bei einer Fehljustierung der Pfosten untereinander, sofern diese nicht in exakter Flucht ausgerichtet sind. Auch dann müssen die einzelnen im Boden verankerten Bolzen neu ausgerichtet werden. Zum Teil ist jedoch eine neue Orientierung des Bohrers nicht mehr möglich, so dass die Flansche in entsprechender Weise nachgearbeitet werden müssen, beispielsweise die Flansche mit entsprechend justierter Bohrung ausgetauscht und neu am Stahlträger angeschweißt werden müssen.

Vorteilhaft wäre es daher, wenn eine Justier- oder Zentriereinrichtung zur Verfügung stehen würde, mit der diese Probleme schnell und einfach beseitigt werden können.

Eine gattungsgemäße Zentriereinrichtung ist durch die DE 100 33 011 A1 bekannt. Diese zeigt eine Zentriereinrichtung mit längsverschiebbaren Klauen, die mit Bolzen an den Flanschen eines festgelegten T-Trägers fixiert werden können. Die bekannten Bolzen sind vor der Montage in ihrer Lage einstellbar und nicht im Boden fixiert.

Eine weitere Zentriereinrichtung ist aus der DE 101 59 380 A1 bekannt, die ein Mutterteil und ein Befestigungsteil mit Schnapphaken zur Festlegung eines Bauteils mit einem Bolzen aufweist. Die Befestigung erfolgt hier primär über die Schnapphaken in vorgefertigten Aufnahmebohrungen des Mutterteils, während der Bolzen nur eine Sicherungsfunktion für die beiden Bauteile besitzt.

Aus der FR 2744501A1 und der WO 2010/006363A1 ist jeweils eine Zentriereinrichtung gemäß dem Oberbegriff des Anspruchs 1 bekannt, die eine Zentrierscheibe mit einem Langloch und eine Zentrierplatte aufweist, wobei zwischen Zentrierscheibe und Zentrierplatte eine sägezahnförmige Arretiereinrichtung vorgesehen ist. Die Zentrierplatte selbst ist mit einer Öffnung durchsetzt, die mit dem Langloch der Zentrierplatte im Montagezustand fluchtet, so dass durch die beiden Öffnungen eine Fixierungsschraube geführt werden kann. Nachteilig an diesen Zentrieranordnungen ist die nur geringe Seitenführung für das Bolzenteil der Schraube in den beiden Öffnungen, so dass es zu seitlichen Verwindungen bzw. Verschiebungen der Schraube im Montagezustand kommen kann.

Der Erfindung liegt daher die Aufgabe zugrunde, eine Zentriereinrichtung der eingangs erwähnten Art zur Verfügung zu stellen, mit der Flansche mit fehlerhaft fixierten Bolzen maßgenau ausgerichtet, und seitenstabil fixiert werden können.

Die erfindungsgemäße Lösung gelingt mit den Merkmalen gemäß dem kennzeichnenden Teil des Anspruch 1.

Die erfindungsgemäße Zentriereinrichtung zur Montage eines mit einer Öffnung versehenen Flansches mit einem Bolzen weist zunächst das Merkmal auf, dass der Durchmesser des Bolzens wesentlich kleiner ist als der Durchmesser der im Flansch vorgesehenen Öffnung, die den Bolzen im Montagezustand aufnimmt.

So kann der Durchmesser der Öffnung vorzugsweise bis zu einem Faktor 3-4 größer sein als der Bolzendurchmesser.

Die Flanschöffnung nimmt zur Befestigung des Bolzens eine vorzugsweise runde Scheibe vollumfänglich auf, die mit einem umlaufenden Bund, der auch in Teilbereichen vorhanden sein kann, versehen ist. Die Scheibe kann innerhalb der ebenfalls runden Öffnung im Bedarfsfall zu Montagezwecken soweit gedreht werden, bis die gewünschte Stellung erreicht ist. Um ein Durchfallen der Scheibe durch die Öffnung zu verhindern, ist der Bund vorgesehen, der bei der Montage in der Öffnung auf dem Flansch aufliegt und Druckkräfte, die bei der Montage auftreten, wirksam aufnimmt.

Um die Arretierung der Scheibe in der Flanschöffnung zu verbessern, kann der im Montagezustand in der Flanschöffnung angeordnete Teil der Scheibe mit einer Kerbverzahnung vorteilhafterweise versehen sein. Hierdurch wird ein Reibschluß im fixierten Zustand erreicht, der die Arretierung der Scheibe weiter begünstigt. Diese Kerbverzahnung kann auf der Außenhülle der hülsenförmigen Scheibe so ausgebildet sein, so dass sie sich kegelförmig zum Bund erweitert.

Die Scheibe weist erfindungsgemäß ein Langloch auf, das der Bolzen im Montagezustand durchsetzt. Das Langloch ist so ausgebildet, dass es an beiden Enden jeweils einen Halbkreis mit einem Radius r und ein die beiden Halbkreise verbindendes Geradstück der Länge l und des Durchmessers 2 r aufweist. Die Gesamtlänge des Langlochs beträgt daher l+2r. Dabei fällt die Längsachse des Langlochs vorteilhafterweise mit der durch den Mittelpunkt der Scheibe verlaufenden Zentralachse der Scheibe zusammen.

Vorteilhafterweise liegt der Mittelpunkt des einen Halbkreises des Langlochs in bzw. unmittelbar benachbart zum Mittelpunkt der Scheibe, während der Scheitelpunkt des zweiten Halbkreises benachbart zum Scheibenrand angeordnet ist. Hierdurch wird gewährleistet, dass eine Justierung des Bolzens ausgehend vom Mittelpunkt der Scheibe bis zum Scheibenrand erfolgen kann, d.h. der Flansch bis zum Doppelten des Bolzendurchmessers und mehr zu Justierungszwecken verschoben werden kann.

Ein weiteres Merkmal der Erfindung ist die Arretierung des Bolzens bezüglich der Scheibe. Hierzu dient eine zytindrische Hülse, deren Innendurchmesser dem Durchmesser des Bolzens entspricht, so dass der Bolzen im Montagezustand in der zylindrischen Hülse passgenau geführt ist. Andererseits entspricht der Außendurchmesser der Hülse dem Querdurchmesser 2r des Langlochs, so dass die Hülse passgenau innerhalb des Langlochs zusammen mit dem Bolzen verschoben werden kann.

Die Hülse weist weiterhin an ihrem oberen Ende einen Hülsenbund auf, der im Montagezustand auf der Scheibe aufliegt und sich von der Scheibe abstützt. Der Hülsenbund kann in identischer Weise wie der Bund der Scheibe ausgebildet sein, d.h. er kann in Teilbereichen unterbrochen sein oder aber ganzstückig die Hülse umgeben.

Um ein Verschieben der Hülse, die den Bolzen aufweist, im montierten Endzustand zu verhindern, ist zwischen dem Hülsenbund und der Scheibe eine Arretiereinrichtung vorgesehen, die nach Erreichen einer vorbestimmten Montageposition die Hülse gegen die Scheibe verschiebungssicher festlegt, insbesondere wenn die gesamte Zentriereinrichtung mit Hilfe einer auf den Bolzen aufgeschraubten Mutter fixiert ist. Falls anstelle eines Schraubbolzens ein Niet oder dergleichen eingesetzt wird, erfolgt die Fixierung durch entsprechende Behandlung des Niets mit Umformungsmaßnahmen oder dergleichen.

Um eine verschiebungssichere Arretierung zu gewährleisten, ist vorzugsweise auf der Unterseite des Hülsenbundes wenigstens eine zahnartige Erhebung vorgesehen, deren Längsachse parallel zur quer durch die Hülse verlaufenden Mittelachse verläuft. Gemäß einer weiteren Ausführungsform ist eine Vielzahl von derartigen ersten zahnartigen Erhebungen auf der Unterseite des Hülsenbundes vorgesehen, die parallel zueinander in einem vorbestimmten gleichen Abstand der Zähne angeordnet sind. Die erste zahnartige Erhebung auf dem Hülsenbund greift in eine zweite wenigstens aus zwei parallelen Zähnen bestehende zahnartige Anordnung auf der Scheibe ein. Diese zweiten zahnartigen Erhebungen erstreckten sich jeweils derart vom Langloch weg, dass die Längsachse der zweiten zahnartigen Erhebung parallel zur Querachse des Langlochs verläuft.

Aufgrund der parallelen Ausrichtung von erster und zweiter zahnartiger Erhebung können die beiden Zahnstrukturen im wesentlichen deckungsgleich im Montagezustand ineinander greifen und somit eine Verschiebung der Hülse relativ zur Scheibe verhindern. Dabei gibt der jeweilige Abstand der Zähne die Positionierungsmöglichkeit durch die Verschieblichkeit von Hülse und Scheibe im Langloch wieder. Diese kann in Abschnitten von 2-3 mm jeweils erfolgen.

Vorzugsgemäß sind folgende Zahnpaarungen möglich:
a) eine erste zahnartige Erhebung auf der Hülse und wenigstens 2 zahnartige Erhebungen, vorzugsweise eine Vielzahl von zahnartigen Erhebungen rundum das Langloch;
b) eine zweite zahnartige Erhebung im Bereich des Langlochs und wenigstens 2 zahnartige Erhebungen am Hülsenrand, vorzugsweise eine Vielzahl von zahnartigen Erhebungen um den Hülsenrand herum, sowie
c) jeweils eine Vielzahl von ersten und zweiten zahnartigen Erhebungen auf dem Hülsenrand und auf der Scheibe.

Gemäß einer weiteren vorteilhaften Ausführungsform werden als Arretiereinrichtung punktartige Erhebungen, beispielsweise Noppen, und passend hierzu punktartige Einsenkungen analog zu den zahnartigen Erhebungen und den Vertiefungen hiervon eingesetzt. Dabei werden als punktartige Einsenkungen auch Löcher bzw. Lochreihen vorgeschlagen, in die die Noppen formschlüssig bei der Montage passen.

Eine weitere vorteilhafte Ausführungsform sieht eine zweite Arretiereinrichtung gegen radiales Verdrehen der Zentrierscheibe in der Öffnung des Flanschs nach der Montage vor. Als Arretiermittel können parallel zur Zentralachse verlaufende, auf dem Umfang des Scheibenteils angeordnete Zahnreihen zum Einsatz kommen, die in entsprechend ausgebildete Zahnreihen in der Wand der Flanschbohrung eingreifen. Bei Montage dieser Ausführungsform wird die Zentrierscheibe zunächst in die passende Montageposition oberhalb des Flanschs Zahn per Zahn gedreht und dann in die Bohrung abgesenkt, wobei die Zähne des Scheibenteils und der Bohrungswand ineinander verdrehsicher verrasten. Handelbare Teile sind vorzugsweise die Hülse mit einem vorbestimmten Innendurchmesser, der dem Durchmesser der im Stahlbau eingesetzten Bolzen entspricht, beispielsweise M18-M30 etc.. Des weiteren gehört hierzu die an die Hülse angepasste Scheibe mit einem Durchmesser, der dem Durchmesser einer vorgefertigten Flanschöffnung entspricht, wobei die Scheibe das erfindungsgemäße Langloch aufweist, die maßgenau die Hülse aufnimmt.

Sowohl die Scheibe als auch die Hülsen, die jeweils einen Teil der erfindungsgemäßen Arretiereinrichtung aufweisen, sind vorzugsweise aus dem Material gefertigt, wie es beim Stahlbau eingesetzt wird, beispielsweise aus Stahl oder Edelstahl.

Die Dimensionierung der erfindungsgemäßen Scheibe und Hülse entspricht dem Einsatzzweck und den üblichen Normen. Für die Montage eines Flansches, der an Stahlbauteile wie Stützen oder dergleichen, befestigt ist, wird der Flansch in der vorbestimmten Weise ausgerichtet, wobei die Bolzen die Öffnungen im Flansch durchsetzen. Im Montagezustand kann mit der erfindungsgemäßen Einrichtung eine Abweichung des mittigen Montagezustands bis zu 3 cm mit der erfindungsgemäßen Einrichtung ausgeglichen werden. Hierzu wird die Scheibe in den Bolzen und anschließend die Flansche in die Öffnung eingeführt, wobei die Scheibe anschließend soweit gedreht wird bis sie sich in der Öffnung befindet und der Rand auf den die Öffnung umgebenden Flanschbereich aufliegt. Im Anschluss daran wird die Hülse auf den Bolzen gesteckt und in die Langlochöffnung durch entsprechende Drehung der Scheibe eingeführt, bis Passgenauigkeit erreicht ist. Im Anschluss daran wird der Hülsenbund so lange gedreht, bis die ersten und zweiten zahnartigen Erhebungen ineinander greifen und dabei die Hülse gegen die Scheibe fixiert wird. Dieser Fixierungszustand ergibt eine Fixierung in Längs- und Querrichtung des Bolzens, so dass nach dem Fixieren des Bolzens mittels einer Schraubenmutter, die gegen die Hülse geschraubt wird, eine seitliche Verschiebung des Flansches nicht mehr möglich ist.

Weitere Merkmale und Vorteile der Erfindung sind Gegenstand der nachfolgenden Beschreibung und der zeichnerischen Darstellung von Ausführungsbeispielen.

Es zeigen
- Fig.1.: eine perspektivische Ansicht einer Zentriereinrichtung,
- Fig.2: einen Schnitt durch die Zentriereinrichtung gemäß Fig.1 entlang der Linie A-A um 180°gedreht
- Fig. 3: eine Zentrierscheibe mit Bund und zahnartigen Erhebungen perspektivisch von oben gesehen,
- Fig. 4: eine Draufsicht auf die Zentrierscheibe gemäß Fig.3,
- Fig. 5: eine Seitenansicht der Zentrierscheibe,
- Fig. 6: eine Ansicht auf den Unterteil der Zentrierscheibe,
- Fig. 7: eine perspektivische Darstellung der Zentrierhülse von schräg unten gesehen,
- Fig. 8: eine Ansicht der Zentrierhülse von unten,
- Fig. 9: eine Seitenansicht der Zentrierhülse,
- Fig. 10: eine Draufsicht auf die Zentrierhülse,
- Fig. 11: eine zweite Seitenansicht der Zentrierhülse, die gegenüber der Seitenansicht gemäß Figur 9 um 90° gedreht ist,
- Fig. 12: eine Draufsicht auf einen Flansch mit der erfindungsgemäßen Einrichtung in Montagestellung und
- Fig. 13: eine Seitenansicht des Flansches gemäß Figur 12, wobei eine Zentriereinrichtung gemäß der Linie B-B im Schnitt dargestellt ist.

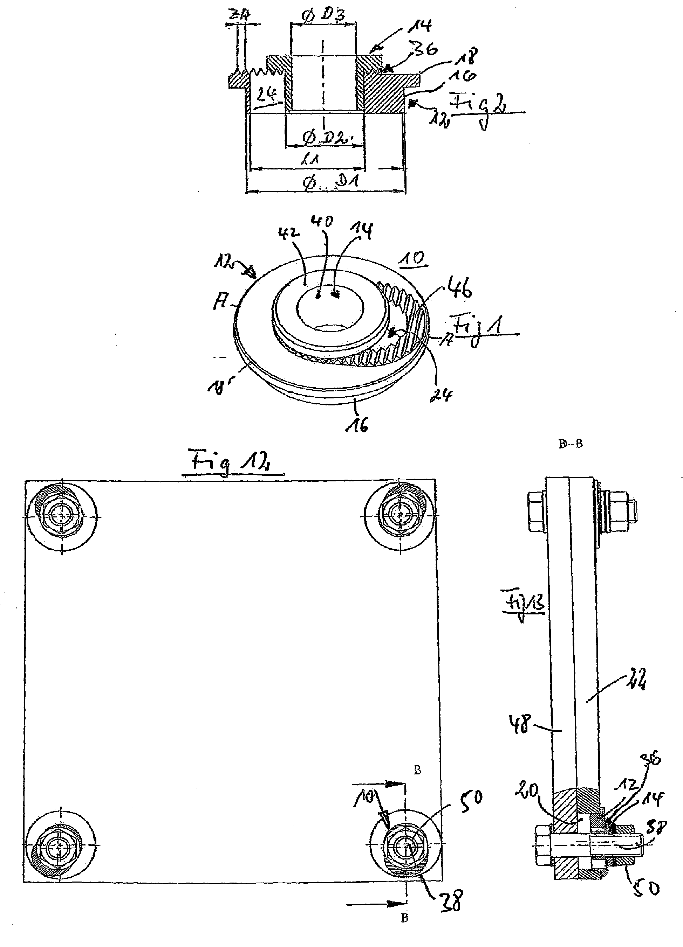

Die Fig. 1 ist eine Zentriereinrichtung 10 mit einer Zentrierscheibe 12 und einer Zentrierhülse 14 perspektivisch und in Fig. 2 im Schnitt entlang der Linie A-A dargestellt.

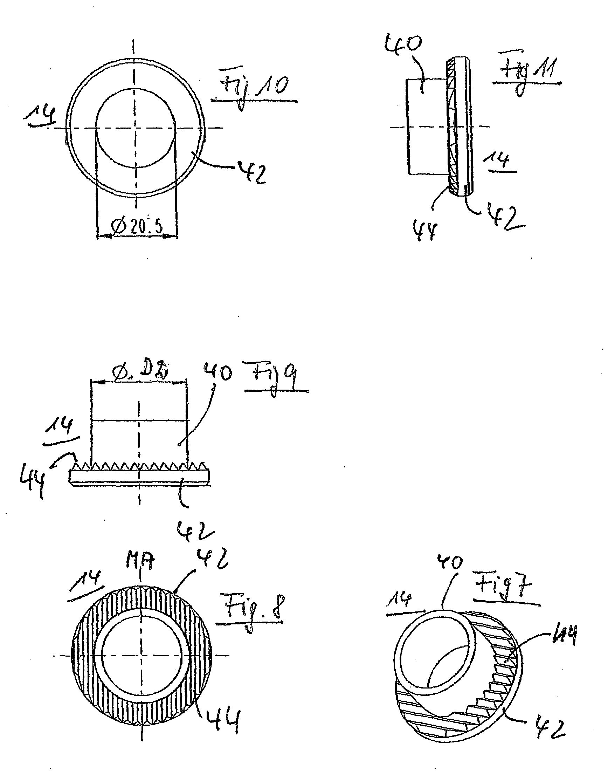

Im Einzelnen sind die Zentrierscheibe 12 in Fig. 1-6 und die Zentrierhülse in Fig. 7-11 dargestellt.

Die Zentrierscheibe 12 weist einen Scheibenteil 16 mit einem Durchmesser D1 auf. Das Scheibenteil 16 selbst ist an seinem oberen Ende mit einem ersten Bund 18 umgeben, dessen Durchmesser größer ist als der Durchmesser D1.

Wie aus Fig. 1-6 ersichtlich ist, weist das Scheibenteil 16 eine im Wesentlichen kreisrunde Form auf, um in einer Öffnung 20 eines Flansches 22, wie aus Fig. 13 ersichtlich ist, aufgenommen werden zu können. Dabei liegt der Bund 18 auf der Flanschoberfläche auf.

Der Durchmesser D1 des Scheibenteils 16 entspricht etwa dem Durchmesser der Öffnung 20 des Flansches 22, so dass das Scheibenteil 16 beim Einsetzen in die Öffnung 20 um jeden beliebigen Winkel gedreht werden kann.

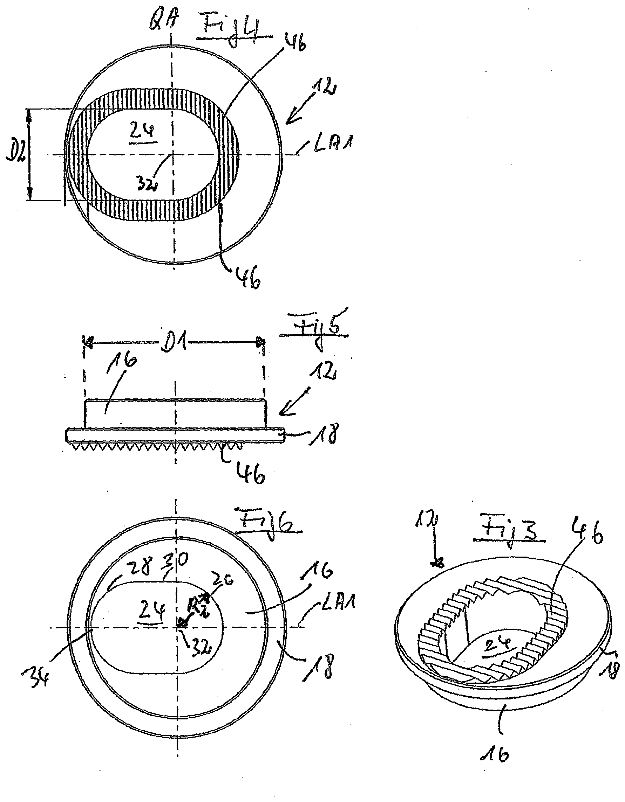

Das Scheibenteil 16 weist ein Langloch 24 auf, das derart ausgebildet ist, das es an beiden Enden jeweils einen Halbkreis 26 und 28 mit einem Radius R besitzt, wobei die beiden Halbkreise 26 und 28 mit einem Gradstück 30 miteinander verbunden sind. Dieses Langloch 24 weist eine Gesamtlänge L 1 auf, wie dies in Fig. 2 dargestellt ist. Wie aus Fig. 4 und 6 insbesondere ersichtlich ist, fällt die Längsachse L A1 des Langlochs 24 mit der durch den Mittelpunkt des Scheibenteils 16 führenden Zentralachse zusammen.

Dabei liegt der Mittelpunkt 32 des einen Halbkreises 26 des Langlochs 24 in etwa im Mittelpunkt 32 des Scheibenteils 16, wobei der Scheitelpunkt 34 des zweiten Halbkreises 28 benachbart zum Rand des Scheibenteils 16 angeordnet ist. Dieses Langloch 24 wird von einem in Fig. 12 und 13 gezeigten Bolzen 38 beim Montieren durchsetzt und ist so ausgebildet, dass der Bolzen 38 entlang der gesamten Länge L1 innerhalb des Langlochs 24 verschoben werden kann. Infolgedessen ist durch die Verschiebungsmöglichkeit eine weite Justierbarkeit des Bolzens 38 vom Scheibenmittelpunkt bis zum Scheibenrand hin möglich, beispielsweise bis zum Doppelten des Durchmessers des Bolzens 38 oder sogar darüber hinaus.

Der Bolzen 38 selbst wird in der Zentrierhülse 14 gehalten, wie dies aus Fig. 13 ersichtlich ist. Die Zentrierhülse 14 weist, wie dies in Fig. 7-11 gezeigt ist, ein Hülsenteil 40 auf, das an einem Ende mit einem umlaufenden Hülsenbund 42 verbunden ist. Der Außendurchmesser D2 der Hülse entspricht dabei dem Querdurchmesser des Langlochs also 2 x R, wie dies aus Fig. 9 in Verbindung mit Fig. 6 ersichtlich ist. Infolgedessen passt das Hülsenteil 40 passgenau in das Langloch 26. Andererseits weist das Hülsenteil 40 einen Innendurchmesser D 3 auf, der dem Durchmesser des Bolzens 38 entspricht, so dass der Bolzen 38 in dem Hülsenteil 40 passgenau beim Montieren aufgenommen wird.

Der Hülsenbund 42 liegt wie aus Fig. 1 und 2 ersichtlich ist, auf den Seitenrändern des Langlochs 24 auf und stützt sich im Montagezustand auf der Zentrierscheibe 12 ab.

Um ein Verschieben der Zentrierhülse 14 gegenüber der Zentrierscheibe 12 zu verhindern, ist zwischen diesen Teilen eine Arretiereinrichtung 36 vorgesehen, wie dies aus Fig. 2 und Fig. 13 ersichtlich ist. Diese Arretiereinrichtung 36 besteht auf der Seite der Zentrierhülse 14 aus ersten zahnartigen Erhebungen 44, die auf der Unterseite des Hülsenbundes 42 angeordnet sind. Die Längsachse der zahnartigen Erhebungen 44 verläuft parallel zur Mittelachse MA der Zentrierscheibe, wie dies aus Fig. 8 ersichtlich ist. Es ist eine Vielzahl derartiger zahnartiger Erhebungen 44 unterhalb des Hülsenbundes 42, jeweils parallel zueinander vorgesehen, wobei die einzelnen Zähne in einem regelmäßigen Abstand ZA (vgl. Fig. 2) sich befinden. Dieser Abstand ZA gibt die Verschiebungsmöglichkeit der Zentrierhülse 14 auf den Zentrierscheibe 20 schrittweise wieder.

Das Gegenstück zu den ersten zahnartigen Erhebungen 44 auf der Zentrierhülse 12 sind die zweiten zahnartigen Erhebungen 46 rundum das Langloch 24. Dabei verläuft die Langsachse (Fig. 4) der zahnartigen Erhebungen 46 parallel zur Querachse QA des Langlochs, wobei sich eine Vielzahl von parallel zueinander angeordneten zahnartigen Erhebungen 46 um das Langloch 24 gruppieren. Der Abstand der einzelnen Zähne 46 ist dabei identisch zu dem Abstand ZA der zahnartigen Erhebungen 44, so dass die beiden zahnartigen Erhebungen 44 und 46 beim Aufeinanderlegen der Zentrierscheiben 12 und der Zentrierhülse 14 miteinander kämmen. Demzufolge stellten die zahnartigen Erhebungen 44 und 46 die Arretiereinrichtung 36 derart dar, das die Zentrierhülse 14 auf der Zentrierscheibe 12 um Schritte, die dem Abstand ZA der jeweiligen Zähne entsprechen gegeneinander versetzt werden können.

Für Montagezwecke weist der Flansch 22 eine Bohrung oder Öffnung 20 auf, in die das Scheibenteil 16 der Zentrierscheibe 12 eingesetzt wird. Dabei kann der Durchmesser der Öffnung 20 bis zum dreifachen des Durchmessers des Bolzens 38 betragen. Zuvor wurde ein Bolzen 38, der im Beispielsfall gemäß Fig. 12 und Fig. 13 auf einer zweiten Flanschplatte befestigt worden ist, durch die Öffnung 20 geführt. Aus Fig. 12 ist ersichtlich, das sich die Bolzen 38 jeweils nicht mittig in der Öffnung 20 befinden so dass der Einsatz der Zentriereinrichtung 10 notwendig wird. Zu diesem Zweck wird die Zentrierscheibe 12 so lange in der Öffnung 20 gedreht, bis der Bolzen 38 in etwa den gleichen Abstand zur Seitenwand des Langlochs 24 hat. Daraufhin wird die Zentrierhülse 14 in den Bolzen 30 eingeführt und kommt auf der Zentrierscheibe 12 zu liegen. Es setzt eine erneute Drehung, jetzt der Zentrierhülse 14, so lange ein, bis die zahnartigen Erhebungen 44 der Zentrierhülse 14 mit den zahnartigen Erhebungen 48 der Zentrierscheibe 12 kämmen und somit eine Verschiebung der gesamten Zentriereinrichtung 10 innerhalb des Flansches 26 sowohl in radialer als auch in Richtung der Längsachse des Langlochs 24 nicht mehr möglich ist. Die Fixierung der Zentriereinrichtung 10 am Flansch 22 erfolgt dann mittels einer Mutter 50, mit der der Bolzen 38 die beiden Flansche 22 und 48 miteinander fixiert.

Mit der Zentriereinrichtung 10 ist es also möglich, außermittig angeordnete Bolzen 38 in einer Öffnung 20 stabil zu zentrieren, und zwar sowohl bezüglich weiterer Befestigungseinheiten (Bolzen) innerhalb eines Flansches als auch zwischen unterschiedlichen, voneinander beabstandeten Flanschen, um eine gerade Linie zu erzeugen.

## Patentansprüche

1. Zentriereinrichtung (10) zur Montage eines mit einer Öffnung (20) versehenen Flansches (22) mit einem Bolzen (38), der die Öffnung (20) im Montagezustand durchsetzt, aufweisend.
a) eine Zentrierscheibe (12) mit einem Scheibenteil (16) und einem das Scheibenteil (16) umgebenden Bund (18), wobei das Scheibenteil (16) in der Öffnung (20) im Montagezustand aufgenommen ist und der Bund (18) auf dem Flansch (22) aufliegt,
b) ein Langloch (24) im Scheibenteil (16), wobei das Langloch (24) an den jeweiligen Enden einen Halbkreis (26, 28) mit einem Radius R und einem die beiden Halbkreise (26, 28) verbindenden Geradstück (30) aufweist und eine Gesamtlänge L1 besitzt,
c) ein Zentrierstück und
d) eine Arretiereinrichtung (36), die das Zentrierstück gegen die Zentrierscheibe (12) in einer vorbestimmten Montageposition verschiebungssicher festlegt,
**dadurch gekennzeichnet, dass**
e) das Zentrierstück eine Zentrierhülse (14) mit einem Hülsenteil (40) aufweist, das mit einem Hülsenbund (42) umgeben ist, wobei der Innendurchmesser D 3 des Hülsenteils (40) dem Durchmesser des Bolzens (30) und der Außendurchmesser D 2 des Hülsenteils (40) dem Querdurchmesser (2 R) des Langlochs (24) entspricht.

2. Zentrieranordnung nach Anspruch 1, **dadurch gekennzeichnet, dass** die Unterseite des Hülsenbundes (42) mindestens eine erste zahnartige Erhebung (44) als ein Teil der Arretiereinrichtung (36) aufweist, deren Längsachse parallel zur Mittelachse MA der Zentrierhülse (14) verläuft oder mit dieser zusammenfällt.

3. Zentrieranordnung nach Anspruch 2, **gekennzeichnet durch** mindestens zwei, vorzugsweise eine Vielzahl von ersten, parallel zueinander angeordneten zahnartigen Erhebungen (42) auf der Unterseite des Hülsenbundes (42).

4. Zentriereinrichtung nach Anspruch 1 oder 3, **dadurch gekennzeichnet, dass** die Oberseite des Scheibenteils (16) mindestens eine zweite zahnartige Erhebung als weiteres Teil der Arretiereinrichtung (36) aufweist, wobei die Längsachse der zweiten zahnartigen Erhebung (46) parallel zur Querachse QA des Langlochs (24) verläuft und die zweite zahnartige Erhebung jeweils seitlich des Langlochs (24) angeordnet ist.

5. Zentriereinrichtung nach Anspruch 2, **gekennzeichnet durch** mindestens zwei, vorzugsweise eine Vielzahl von zweiten Erhebungen (46) im gleichen Zahnabstand ZA voneinander und parallel zueinander entlang des Langlochs (24) angeordnet, wobei die ersten und zweiten zahnartigen Erhebungen (44) und (46) im Montagezustand aufgrund des gleichen Zahnabstandes ZA kämmen und die Zentrierhülse (12) und die Zentrierscheibe (14) arretieren.

## Claims

1. Centering device (10) for mounting a flange (222) provided with an opening (20) with a bolt (38) which passes through the opening (20) in the mounted state, comprising
a) a centering disk (12) having a disk part (16) and a collar (18) surrounding the disk part (16), wherein the disk part (16) is received in the opening (20) in the mounted state and the collar (18) rests on the flange (22),
b) an elongate hole (24) in the disk part (16), wherein the elongate hole (24) has at the respective ends a semicircle (26, 28) having a radius R and a straight piece (30) connecting the two semicircles (26, 28) and has an overall length L1,
c) a centering piece and
d) a locking device (36) which fixes a centering piece against the centering disk (12) in a predetermined mounting position secure against displacement,
**characterized in that**
e) the centering piece comprises a centering sleeve (14) with a sleeve part (40) which is surrounded by a sleeve collar (42), wherein the inside diameter D3 of the sleeve part (40) corresponds to the diameter of the bolt (30) and the outside diameter D2 of the sleeve part (40) corresponds to the transverse diameter (2R) of the elongate hole (24).

2. The centering arrangement according to claim 1, **characterized in that** the lower side of the sleeve collar (42) comprises at least a first tooth elevation (44) as a part of the locking device (36), whose longitudinal axis runs parallel to the central axis MA of the centering sleeve (14) or coincides with this.

3. The centering arrangement according to claim 2, **characterized in that** at least two, preferably a plurality of first tooth elevations (44) are arranged parallel to one another on the underside of the sleeve collar (42).

4. The centering arrangement according to claim 1 or 3, **characterized in that** the upper side of the disk part (16) has at least one second tooth elevation as another part of the locking device (36), wherein the longitudinal axis of the second tooth elevation runs parallel to the transverse axis QA of the elongate hole (24) and the second tooth elevation is in each case disposed laterally of the elongate hole (24).

5. The centering arrangement according to claim 1, **characterized in that** at least two, preferably a plurality of second elevations (46) are disposed at the same tooth spacing ZA from one another and parallel to one another along the elongate hole (24), wherein the first and second tooth elevations (44) and (46) intermesh in the mounted state as a result of the same tooth spacing ZA and lock the centering sleeve (12) and the centering disk (14).

## Revendications

1. Dispositif de centrage (10), destiné à monter une bride (22) munie d'un orifice (20), avec un boulon (38) qui traverse l'orifice (20) en position de montage, comportant
a) un disque de centrage (12) avec une partie disque (16) et un épaulement (18) entourant la partie disque (16), en position de montage, la partie disque (16) étant réceptionnée dans l'orifice (20) et l'épaulement (18) reposant sur la bride (22),
b) un trou oblong (24) dans la partie disque (16), le trou oblong (24) comportant sur les extrémités respectives un demi-cercle (26, 28) avec un rayon R et une partie droite (30) reliant les deux demi-cercles (26, 28) et disposant d'une longueur totale L1,
c) une pièce de centrage et
d) un dispositif de blocage (36) qui immobilise en évitant tout décalage la pièce de centrage contre le disque de centrage (12), dans une position de montage prédéfinie
**caractérisé en ce que**
e) la pièce de centrage comporte une douille de centrage (14) avec une partie douille (40) qui est entourée d'un épaulement de douille (42), le diamètre intérieur D3 de la partie douille (40) correspondant au diamètre du boulon (30) et le diamètre extérieur D2 de la partie douille (40) correspondant au diamètre transversal (2R) du trou oblong (24).

2. Agencement de centrage selon la revendication 1, **caractérisé en ce que** la face inférieure de l'épaulement de douille (42) comporte au moins une première élévation (44) en forme de dent, en tant qu'une partie du dispositif de blocage (36) dont l'axe longitudinal s'écoule à la parallèle de l'axe médian MA de la douille de centrage (14) ou qui coïncide avec celle-ci.

3. Agencement de centrage selon la revendication 2, **caractérisé par** au moins deux, de préférence une pluralité de premières élévations (42) en forme de dents, placées à la parallèle les unes des autres sur la face inférieure de l'épaulement de douille (42).

4. Dispositif de centrage selon la revendication 1 ou 3, **caractérisé en ce que** la face supérieure de la partie disque (16) comporte au moins une deuxième élévation en forme de dent, en tant que partie supplémentaire du dispositif de blocage (36), l'axe longitudinal de la deuxième élévation (46) en forme de dent s'écoulant à la parallèle de l'axe transversal QA du trou oblong (24) et la deuxième élévation en forme de dent étant respectivement placée latéralement du trou oblong (24) .

5. Dispositif de centrage selon la revendication 2, **caractérisé par** au moins deux, de préférence une pluralité de deuxièmes élévations (46) placées à un même écart entre les dents et à la parallèle les unes des autres le long du trou oblong (24), dans la position de montage, en raison du même écart ZA entre les dents, les premières et les deuxièmes élévations (44) et (46) en forme de dents s'engrenant et bloquant la douille de centrage (12) et le disque de centrage (14) .
